(19) Europäisches Patentamt
European Patent Office
Office européen des brevets

(11) **EP 2 399 103 B1**

(12) **EUROPÄISCHE PATENTSCHRIFT**

(45) Veröffentlichungstag und Bekanntmachung des Hinweises auf die Patenterteilung:
**03.04.2013 Patentblatt 2013/14**

(21) Anmeldenummer: **10705804.2**

(22) Anmeldetag: **18.02.2010**

(51) Int Cl.:
**G01G 11/00** (2006.01)   **B65G 65/20** (2006.01)

(86) Internationale Anmeldenummer:
**PCT/EP2010/001017**

(87) Internationale Veröffentlichungsnummer:
**WO 2010/094479 (26.08.2010 Gazette 2010/34)**

(54) **VORRICHTUNG UND VERFAHREN ZUR BESTIMMUNG DER ABRÄUMFÖRDERSTÄRKE EINES BRÜCKENABRÄUMERS**

APPARATUS AND METHOD FOR DETERMINING THE CLEARING CONVEYING RATE OF A DRUM RECLAIMER

DISPOSITIF ET PROCÉDÉ DE DÉTERMINATION DE L'ÉPAISSEUR D'ENLÈVEMENT DES DÉBLAIS PAR UN TAMBOUR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **18.02.2009 DE 102009009412**

(43) Veröffentlichungstag der Anmeldung:
**28.12.2011 Patentblatt 2011/52**

(73) Patentinhaber:
• **Schenck Process GmbH**
  **64293 Darmstadt (DE)**
• **Arcelormittal Investigación y Desarrollo SL**
  **48910 Sestao-Vizcaya (ES)**

(72) Erfinder:
• **SCHNELLBÄCHER, Roland**
  **64686 Lautertal (DE)**
• **BAUWENS, Antoine**
  **9940 Evergem (BE)**

(56) Entgegenhaltungen:
**DE-U- 1 886 060    DE-U1- 8 619 715
FR-A- 1 317 374**

**Beschreibung**

Die vorliegende Erfindung betrifft eine Vorrichtung und ein Verfahren zur Bestimmung bzw. Erfassung der Abräumförderstärke eines Brückenabräumers für Schüttgut und in Folge auch der Fördermenge des Brückenabräumers, insbesondere eines Trommelabräumers (im Englischen auch als "drum reclaimer" bezeichnet).

Für einen optimalen Materialfluss in industriellen Prozessen, zum Beispiel in einer Sinteranlage, in einem Kraftwerk oder bei der Stahlherstellung in einem Stahlwerk, müssen die zu verarbeitenden Schüttgüter, wie Kohle, Erz und dergleichen häufig in großen Mengen bevorratet und gegebenenfalls miteinander gemischt werden. Für die Lagerung entsprechender stückiger Rohmaterialien hat sich die Halden- oder Mischbetthaldenlagerung in Form von Einzel- bzw. Mehrkomponenten-Mischbetten etabliert. Die Halden oder Mischbetthalden werden mit automatisch gesteuerten Bandabsetzern (im Englischen auch als "stacker" bezeichnet) aufgefüllt, die an ein Fördersystem angebunden sind, das zum Beispiel aus Fördergurten aufgebaut ist. Die Materialentnahme aus einer jeweiligen Halde erfolgt mit Hilfe spezieller Abräumgeräte, die im Weiteren als Abräumer (im Englischen auch als "reclaimer" bezeichnet) bezeichnet werden, die ihrerseits wiederum in dem Fördersystem integriert sind, mit dem das Roh- und/oder Mischmaterial weiter befördert wird.

Bei verschiedenen Schüttgütern aus einer Halde oder auch Mischbetthalde steht oftmals eine möglichst hohe Homogenität der jeweiligen zu erzielenden Mischung im Vordergrund, wobei sich höchste Misch- und Vergleichmäßigungseffekte mit haldenstirnseitig arbeitenden Brückenabräumern (im Englischen auch als "bridge type reclaimer" bezeichnet) beim Abräumen einer Halde erzielen lassen. Ein gattungsbildender Brückenabräumer der vorliegenden Erfindung ist mit einem um eine horizontale Achse drehbaren Abräumrotationswerkzeug ausgestattet. Ein solches Abräumrotationswerkzeug kann z.B. als ein Abräumfördertrommel ausgebildet sein, die sich über die gesamte Brückenspannweite des Abräumers erstreckt. Ein solcher Brückenabräumer wird im Weiteren als Trommel-Brückenabräumer (im Englischen auch als "bridge type drum reclaimer" bezeichnet) oder kurz als Trommelabräumer (im Englischen auch als "drum recaimer" bezeichnet) bezeichnet.

Ein Brückenabräumer zeichnet sich durch eine vergleichsweise hohe Abräum- bzw. Förderleistung im Vergleich zu Abräumern anderer Gattungen aus. In der Regel bildet ein Hohlkastenträger den Brückenarm eines jeweiligen Abräumers, der an seinen beiden Stirnseiten von Pfeilern getragen wird. Mit auf Schienen geführten Fahrgestellen, die in den Füßen der tragenden Brückenpfeiler integriert sind, kann der Abräumer quer zur horizontalen Drehachse des Abräumrotationswerkzeugs über die gesamte Länge einer jeweiligen Mischbetthalde verfahren werden. Ein solcher Brückenabräumer überspannt dabei eine Breite des Mischbetts, die in der Regel die gesamte Breite des Mischbettes ist und üblicher Weise zwischen 30 und 50 m beträgt. Unter dem Brückenträger befindet sich das Abräumrotationswerkzeug, das einen horizontal zur Oberfläche der Mischbetthalde und quer zur Vorschubrichtung des Abräumers ausgerichteten, drehbar gelagerten und hohlen Zylinder als Grundelement besitzt. Im Falle einer Abräumfördertrommel entspricht dieser in seiner Länge in der Regel der Breite der Mischbetthalde und weist üblicher Weise einen Durchmesser zwischen 5 und 6 m auf. Während der Drehbewegung nimmt das Abräumrotationswerkzeug über eine Vielzahl von einzelnen Förderschaufeln, die um die Außenseite ihres zylindrischen Hohlkörpers über die gesamten Länge und über den gesamten Umfang verteilt sind, das Schüttgut aus der Mischbetthalde auf. Die Förderschaufeln bilden zur Zylinderwand Öffnungen aus, durch welche das aufgenommene Schüttgut in Folge der Drehbewegung daraufhin in das Innere des Abräumrotationswerkzeugs abgeworfen wird. Durch den Innenraum des drehbaren Abräumrotationswerkzeugs läuft ein Endlosförderband, welches das aufgenommene Schüttgut aus einer der Stirnseiten der Abräumrotationswerkzeugs hinaus fördert und auf eine weitere Fördereinrichtung zur weiteren Bearbeitung abwirft. Diese weitere Fördereinrichtung verläuft somit in der Regel außerhalb der Mischbetthalde und entlang der gesamten Länge einer solchen Halde.

Eine abzuräumende Mischbetthalde kann hierbei auf eine Länge von mehreren hundert Metern ausgelegt sein, wobei für eine hohe Förderleistung auch mehrere Brückenabräumer gleichzeitig auf einer Mischbetthalde eingesetzt werden können und z.B. hintereinander auf einem gemeinsamen Schienenweg angeordnet und verfahrbar sind. Die Fahrschienen erstrecken sich herkömmlich ebenfalls über die gesamte Länge einer jeweiligen Halde und parallel zu der gemeinsam genutzten äußeren, d.h. weiteren Fördereinrichtung.

Ferner ist in der Regel für die nachfolgenden Prozesse zum Einen eine definierte und zeitlich konstante Menge des über die weitere Fördereinrichtung der weiteren Bearbeitung zugeführten Schüttguts erforderlich, zum Anderen darf die diese weitere Fördereinrichtung, insbesondere bei gleichzeitig auf einer Mischbetthalde arbeitenden Brückenabräumern, nicht übermäßig vollgeladen werden. Daher ist es wünschenswert, die Abräumförderstärke eines jeweiligen Brückenabräumers, insbesondere auch im Fall von gleichzeitig arbeitenden Brückenabräumern einzeln bestimmen zu können und darüber die jeweilige Vorschubgeschwindigkeit zu regeln.

Die Massenströme von kontinuierlich über Förderbänder bewegten Schüttgütern werden im Hüttenwesen grundsätzlich mit Förderbandwaagen gemessen, die in einem Abschnitt eines Förderbandes integriert sind. In der Fördertechnik sind entsprechende Einrichtungen als Ausführung von Einrollen- und von Mehrrollenförderbandwaagen bekannt, wobei letztere eine höhere Genauigkeit bei größeren Förderstärken und höheren maximalen Gewichtslasten erreichen.

Für das durch den Innenraum des drehbaren Abräumrotationswerkzeugs laufende Endlosförderband, welches das Schüttgut im Innern aufnimmt und zu einer der Stirnseiten des Abräumrotationswerkzeugs hinaus fördert, wird in der Praxis zumeist eine Fördereinrichtung vom Typ eines Gurtförderer eingesetzt, die ein Bandgerüst besitzt, welches eine Tragkonstruktion, z. B. aus Stahlprofilen, bildet und auf zumindest einer Ober- und/oder Unterseite die Förderrollen (auch als Trag- bzw. Untergurtrollen bezeichnet) für ein umlaufendes Endlosförderband aufnimmt, das auch als Fördergurt bezeichnet wird. Ein solcher Fördergurt bzw. ein solches Förderband besitzt in der Regel ein tragendes Textil- oder Drahtgewebe, die sogenannte Karkasse, die allseitig mit verschleißfesten Gummideckplatten umgeben ist. Für eine gleichmäßige Spannung des Förderbands sind entsprechende Spannvorrichtungen vorgesehen, die im Bandgerüst integriert sind, welches ferner die Antriebe für den Fördergurt umfasst. Die Förderrollen eines Gurtförderers sind herkömmlich in regelmäßigen Abständen entlang einer solchen Fördereinrichtung angeordnet, wobei die Förderollen auf der Oberseite der Fördereinrichtung bevorzugt als ein sogenannter Rollenstuhl ausgebildet sein können, der eine horizontal angeordnete Rolle und zwei seitliche Rollen besitzt, die im stumpfen Winkel zu der horizontalen Rolle angeordnet sind. Somit ergibt sich für das auf dem Rollenstuhl laufende Förderband ein im Wesentlichen wannenförmiges Profil im Querschnitt zu dessen Förderrichtung. Am Anfang und am Ende einer jeweiligen Fördereinrichtung sind Aufnahme- bzw. Abwurfstationen für das entsprechend zu befördernde Schüttgut vorgesehen.

Für die Integration einer Förderbandwaage in eine Fördereinrichtung ist eine Anpassung des Bandgerüsts in dem entsprechenden Einbaubereich erforderlich. Die Messstrecke einer Mehrrollenförderbandwaage besitzt eine ausgewählte Anzahl benachbarter Förderrollen, die bezüglich ihrer Eigenmasse und der Masse des aufliegenden Förderbands und Schüttguts vom Bandgerüst entkoppelt sind. Zur Entkopplung sind die entsprechenden Förderrollen auf einer gemeinsamen Brücke montiert, mit der die gesamte auf-die Messstrecke wirkende Gewichtskraft in Wägezellen einzukoppeln ist, die ihrerseits wiederum auf dem Bandgerüst gelagert sind.

Eine solche Förderbandwaage erfasst über ihre Wägezellen das Gewicht des Materials, das sich auf dem als Messstrecke definierten Abschnitts des Förderbands befindet. Über wenigstens einen Geschwindigkeitsaufnehmer wird die Bandgeschwindigkeit des Förderbands gemessen. Das Förderband wird im Bereich einer Aufnahmestation beladen und fördert das gesamte Schüttgut entlang der Förderrichtung über die Messstrecke hinweg bis zu der vorgesehenen Abwurfstation. Somit ergibt das Produkt aus dem gemessenen Gewicht und der Geschwindigkeit des Förderbands die aktuelle Förderstärke. Durch die zeitliche Integration der Förderstärke berechnet sich die Fördermenge einer solchen Fördereinrichtung.

Der Einsatz einer Mehrrollenförderbandwaage scheidet jedoch bisher zum Messen der Abräumförderstärke bei Brückenabräumern, z.B. auch für eine hierauf basierte Vorschubsteuerung, häufig aus konstruktiven Gründen aus. Die Messstrecke einer Mehrrollenförderbandwaage umfasst herkömmlicherweise je nach Anwendung typischer Weise eine Länge zwischen 4 m und 6 m. Für eine entsprechend lange Messstrecke ist im Fall eines Trommelabräumers zwischen der seitlichen bzw. stirnseitigen Trommelöffnung, aus der ein jeweiliger Fördergurt hinaus geführt ist, und dem Abwurfbereich, in dem das Schüttgut an die seitlich zur Mischbetthalde verlaufenden weiteren Fördereinrichtung übergeben wird, kein ausreichender Platz vorhanden. Die Verlagerung der Messstrecke in die seitlich zur Mischbetthalde verlaufende, weitere Fördereinrichtung kommt dann nicht in Betracht, wenn mehrere Brückenabräumer gleichzeitig Schüttgut auf die selbe weitere Fördereinrichtung abwerfen, da aus der entsprechend gemessenen Gesamtfördermenge nicht auf die Abräumförderstärke eines einzelnen Brückenabräumers zurückgerechnet und in Folge somit auch nicht zur Vorschubsteuerung eines einzelnen Brückenabräumers verwendet werden kann.

Eine Verlängerung des Bandgerüsts zwischen der Stirnseite einer Abräumfördertrommel, aus der das Schüttgut hinaus gefördert wird, und dem Abwurfbereich des durch das Abräumrotationswerkzeuges geführten Förderbands ist eine technisch/wirtschaftlich ungünstige Lösung, da die seitlich zur Mischbetthalde verlaufende weitere Fördereinrichtung von der hierdurch verlängerten Messstrecke entsprechend weiter von der Mischbetthalde beanstandet verlaufen müsste. Somit ergäbe sich auf einer Haldenlänge von mehreren einhundert Metern ein nicht unerheblicher zusätzlicher Platzbedarf von mehreren hundert Quadratmetern Industrienutzfläche.

Die Messstrecke kann auch nicht zumindest teilweise in das Abräumrotationswerkzeug hinein verlagert werden, um die fehlende Länge für die Messstrecke zu gewinnen, da aufgrund der begrenzten Platzverhältnisse im Inneren des Abräumrotationswerkzeuges die Montage einer auf Wägezellen gelagerten Messstrecke auf dem eigentlichen Bandgerüst nicht möglich ist. Das durch die Fördertrommel verlaufende Bandgerüst ist auf den begrenzten Einbauraum hin optimiert, so dass beispielsweise auch auf hoch aufbauende Rollenstühle verzichtet wird, die dem Fördergurt grundsätzlich das wannenförmiges Querschnittsprofil verleihen, oder dass der Ober- und Untergurt mit einem reduzierten Abstand zueinander geführt werden.

Zur Ermittlung der Förderstärke eines einzelnen Brückenabräumers, die den entscheidenden Parameter für dessen Vorschubsteuerung darstellt, können nach dem derzeitigen Stand der Technik lediglich Einrollenförderbandwaagen eingesetzt werden, die in dem Bereich der Fördereinrichtung eingebaut werden können, der zischen der Stirnseite des Abräumrotationswerkzeuges und dem Schüttgutabwurf seitlich des Brückenabräumers liegt. Im Vergleich zu den Mehrrollenförderbandwaagen weisen diese Einrollenförderbandwaagen jedoch eine geringe Genauigkeit bei der Bestimmung von Förderstärke und daraus resultierend der Fördermenge auf.

Eine Aufgabe der vorliegenden Erfindung ist es somit, eine verlängere Messstrecke unter Berücksichtigung des beschränkten Einbauraumes im Abwurfbereich eines Brückenabräumers zur quantitativ hochwertigen Bestimmung der Förderstärke zu ermöglichen, welche insbesondere auch im Inneren eines Abräumrotationswerkzeuges einsetzbar ist.

Die Lösung dieser Aufgabe ist durch den Gegenstand gemäß dem unabhängigen Vorrichtungsanspruch und dem nebengeordneten Verfahrensanspruch gegeben.

Bevorzugte und/oder vorteilhafte Ausführungen und Weiterbildungen sind Gegenstand der jeweiligen Unteransprüche.

Eine erfindungsgemäße Vorrichtung zur Bestimmung der Abräumförderstärke eines Brückenabräumers umfasst im Wesentlichen ein, wie vorstehend beschrieben an sich bekanntes Abräumrotationswerkzeug und eine ebenfalls wie vorstehend beschrieben an sich bekannte Fördereinrichtung eines solchen Brückenabräumers. Das Abräumrotationswerkzeug, insbesondere eine Abräumfördertrommel, rotiert um eine horizontale Achse und ist dazu ausgebildet, Schüttgut aus einer unter ihr liegenden Schüttguthalde bzw. aus einem Mischbettes aufzunehmen und zu ihrer Rotationsachse hin in das Innere des Abräumrotationswerkzeuges abzuwerfen. Die Fördereinrichtung verläuft üblicher Weise im Wesentlichen parallel zur Rotationsachse des Abräumrotationswerkzeuges und ist derart durch dieses geführt, dass sie das abgeworfene Schüttgut aufnehmen und zu einer Stirnseite des Abräumrotationswerkzeuges hinaus befördern kann. Eine jeweilige Fördereinrichtung besitzt ein Endlosförderband, das von Förderrollen (auch Tragrollen genannt) getragenen ist und ein Bandgerüst, auf dem diese Förderrollen befestigt sind, in bevorzugter Weise in regelmäßigen Abständen zueinander befestigt sind, und durch dieses getragen sind.

Erfindungsgemäß ist vorgesehen, eine verlängere Messstrecke zur quantitativ hochwertigen Bestimmung der Förderstärke dadurch bereitzustellen, dass die Fördereinrichtung an ihren gegenüberliegenden Enden, die außerhalb des Wirkungsbereichs des rotierbaren Abräumrotationswerkzeuges liegen, über wägeszellen an einer ersten Tragkonstruktion eingehängt ist.

Somit wird durch die Erfindung eine Mehrrollenförderbandwaage im Wesentlichen bereits durch die in einem Brückenabräumer vorhandene Fördereinrichtung selbst bereitgestellt, die somit aufgrund der erfindungsgemäßen Einhängung über Wägezellen über die gesamte Länge der Fördereinrichtung hinweg eine Wägemessstrecke ausbildet, ohne dass ein bisher an und für sich für eine Mehrrollenförderbandwaage notwendiger zusätzlicher Platzbedarf notwendig ist.

Ein weiterer Wesentlicher Vorteil kann darin gesehen werden, dass die Mehrrollenbandwaage auch nachträglich in ein bereits vorhandenes Abäumrotationswerkzeug und/oder eine bereits vorhandene Fördereinrichtung eines solchen Brückenabräumers integriert werden kann.

Vorzugsweise ist das Abräumrotationswerkzeug des Brückenabräumers an einer zweiten Tragkonstruktion befestigt, die einen Brückenarm umfasst, der eine Schüttgut- bzw. Mischbetthalde überspannt und an jeweils seien beiden Enden von wenigstens einer Stütze getragen ist. Die durch das Abräumrotationswerkzeug geführte Fördereinrichtung erstreckt sich dabei im Wesentlichen über die gesamte Breite der zweiten Tragkonstruktion. Die Fördereinrichtung ist dabei wenigstens an einem Ende mit seitlichem Abstand bis zur wenigstens einen Stütze der zweiten Tragkonstruktion geführt, wobei am Ende der Tragkonstruktion und Fördereinrichtung eine Abwurfvorrichtung für das Schüttgut vorgesehen ist. Durch diese Abwurfvorrichtung kann das abgeräumte Schütt- oder Mischgut zum weiteren Transport beispielsweise auf eine weitere externen Fördereinrichtung abgeworfen werden.

Die erste Tragkonstruktion, über die eine jeweilige Fördereinrichtung über Wägezellen gelagert ist, kann ihrerseits an den Stützen der zweiten Tragkonstruktion befestigt sein.

Der zweckmäßige konstruktive Aufbau eines Brückenabräumers nach der Erfindung hat von Vorteil, dass das Abräumrotationswerkzeug und die Fördereinrichtung unabhängig voneinander an wenigstens einem Tragwerk befestigt sind und somit ihre Gewichtskräfte unabhängig von einander in die jeweiligen tragenden Strukturen einleiten. Besonders Vorteilhaft ist, dass die Wägezellen, auf denen eine entsprechende Fördereinrichtung gelagert ist, lediglich das Gewicht des abgeräumten Schütt- oder Mischguts und das Gewicht der Förderstrecke selbst erfassen, nicht jedoch das Gewicht des Abräumrotationswerkzeug. Das aktuelle Gewicht des auf der Förderstrecke befindlichen Schüttguts korrespondiert somit mit der zu bestimmenden Förderstärke.

Die zweite Tragkonstruktion eines derartigen Brückenabräumers ist in bevorzugter Weise entlang der Schüttgut- oder Mischbetthalde orthogonal zur Rotationsachse des Abräumrotationswerkzeuges verfahrbar. Hierfür sind zweckmäßig in den seitlichen Stützen des Brückenarms Fahrwerke aus einer Gruppe von Räder vorgesehen, die bevorzugt auf Schienen entlang der Längsseiten der jeweiligen Halde geführt sind. Die Vorschubgeschwindigkeit ist in praktischer Weiterbildung über die erfindungsgemäß bestimmte Abräumförderstärke geregelt.

Die erfindungsgemäße Vorrichtung zur Bestimmung der Abräumförderstärke ist in bevorzugter weise für die Verwendung in bzw. für einen Trommelabräumer geeignet. Das Abräumrotationswerkzeug eines solchen Trommelabräumers umfasst eine Abräumfördertrommel, die sich entlang ihrer Rotationsachse über die gesamte Spannbreite des Brückenarms erstreckt. Beim Abräumen eines Mischbetts zeichnet sich diese Abräumfördertrommel durch den Vorteil einer besonders homogenen Durchmischung des abgeräumten Mischguts und einer gleichzeitig großen Förderstärke aus.

Die Erfindung umfasst des Weiteren ein Verfahren zur Bestimmung der Abräumförderstärke, bei dem das Gewicht des auf der Fördereinrichtung befindlichen Schüttguts mittels der Förderbandwaage gewogen wird und bei dem zur Ermittlung der mit dem Gewicht des Schüttguts korrespondierenden Abräumförderstärke ein weiterer Parameter herangezogen wird, der die effektive Länge der Messstrecke der Förderbandwaage repräsentiert.

Ein wesentlicher Vorteil dieses Verfahrens ist, das die effektive Länge der Messstrecke eine von der geometrischen Länge einer erfindungsgemäßen Vorrichtung unabhängige Größe ist. Im Gegensatz zu einer in einem Abschnitt einer Fördereinrichtung integrierten Mehrrollenförderbandwaage nach dem Stand der Technik muss die geförderte Masse des Schüttguts somit nicht über die gesamte Längen der Messstrecke bewegt werden, um eine aktuelle Förderstärke zu bestimmen. Hierdurch wird es möglich, eine Fördereinrichtung auch innerhalb des Bereichs einer integrierten Messstrecke mit gefördertem Schüttgut zu beschicken.

In bevorzugter Weise wird für die effektive Länge der Messstrecke unter Verwendung eine Abräumfördertrommel, die sich entlang ihrer Rotationsachse im Wesentlichen über die gesamte Spannbreite des Brückenarms erstreckt, die halbe Länge der Förderstrecke herangezogen, die von der Abräumfördertrommel überspannt wird.

Durch diese Parametrierung kann in Überraschend einfacher Weise für die Bestimmung der aktuellen Förderstärke der Umstand berücksichtigt werden, dass zwar die Masse des von der Fördertrommel abgeräumten Schüttguts entlang der Fördereinrichtung gleichmäßig ist, jedoch die auf der Fördereinrichtung transportierte Masse nicht gleichmäßig entlang der Fördereinrichtung verteilt ist, sondern in Förderrichtung der Fördereinrichtung stetig zunimmt.

Das erfindungsgemäße Verfahren eignet sich somit besonders Vorteilhaft für die Steuerung der Vorschubgeschwindigkeit eines Brückenabräumers.

Weitere Merkmale und Vorteile der Erfindung werden aus der nachfolgenden detaillierten Beschreibung einer bevorzugten, jedoch lediglich beispielhaften Aufführungsform der Erfindung unter Bezugnahme auf die beigefügten Zeichnungen ersichtlich. In den Zeichnungen zeigen:

Fig. 1    einen Ausschnitt aus einer perspektivischen Darstellung eines (Trommel-) Brückenabräumers mit einer Vorrichtung zur Bestimmung der Abräumförderstärke.

Fig. 2    eine schematische Darstellung einer in eine Fördereinrichtung integrierten, herkömmlichen Mehrrollenförderbandwaage.

Fig. 3    eine schematische Darstellung einer Förderbandwaage nach der Erfindung, die in einem Brückenabräumer integriert ist.

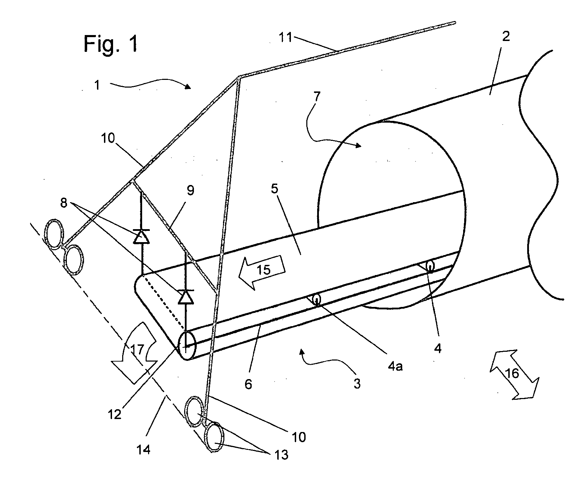

In der Fig. 1 ist ein Teil eines Brückenabräumers mit der erfindungsgemäßen Vorrichtung zur Bestimmung der Abräumförderstärke skizziert, wobei grundsätzlich auf die in der Einleitung dargelegten Definition eines gattungsgemäßen Brückenabräumers verwiesen wird und somit auf eine Wiederholung bei der nachfolgenden Beschreibung weitgehend verzichtet wird.

In Fig. 1 ist die bevorzugte Ausführungsform eines Trommel-Brückenabräumers dargestellt. Der Trommelabräumer 1 umfasst eine um dessen horizontale Achse rotierbares Abräumrotationswerkzeug 2, das in Form einer Abräumfördertrommel, oder einfach als Fördertrommel bezeichnet, ausgebildet ist. Typische Durchmesser einer solchen Fördertrommel betragen z.B. zwischen 5m und 6m, können jedoch auch größer oder kleiner sein. Die Fördertrommel besitzt eine Länge, die wiederum die Breite einer hierdurch abräumbaren Mischbetthalde, auf der Schüttgut wenigstens einer Sorte aufgeschüttet ist, vorgibt. Übliche Längen können z.B. 25m bis 45m breite Mischbetthalden überspannen, wobei eine solche Mischbetthalde in der Zeichnung aus Gründen der Übersichtlichkeit nicht explizit dargestellt ist.

Durch das Innere der Fördertrommel 2 verläuft eine Fördereinrichtung 3, die sich entlang bzw. parallel der Rotationsachse der Fördertrommel 2 erstreckt und beidseitig aus den gegenüberliegenden Stirnseiten 7 der Fördertrommel 2 heraus geführt ist. In der Fig. 1 ist lediglich die in Förderrichtung 15 der Fördereinrichtung 3 weisende Stirnseite 7 der Fördertrommel 2 dargestellt.

Der gesamte Trommelabräumer 1 ist zweckmäßig quer zu der Rotationsachse des Abräumrotationswerkzeug 2 spiegelsymmetrisch aufgebaut, so dass die der in Fig. 1 dargestellten Stirnseite 7 gegenüberliegende, nicht dargestellte Stirnseite des Trommelabräumers 1 zu der in Fig. 1 dargestellten Stirnseite 7 im Wesentlichen gleich aufgebaut ist.

Die Fördereinrichtung 3 umfasst ein Endlosförderband 5 das von einer Vielzahl von Förderrollen 4 und 4a getragen ist, die von einem Bandgerüst 6 getragen sind und zweckmäßig gleichmäßig von einander beabstandet sind. In der Fördereinrichtung 3 sind unter anderem zusätzlich Antriebs- und Spannvorrichtungen für das Endlosförderband integriert, die in der Skizze nicht dargestellt sind. Die Fördereinrichtung ist außerhalb der Fördertrommel 2 an eine erste Tragkonstruktion 9 gehängt.

Die Fördertrommel 2 ist an einer zweiten Tragkonstruktion befestigt, die einen von Stützen 10 eingerahmten Brückenarm 11 umfasst, der sowohl die Halde in deren Breite, als auch die Fördertrommel 2 in deren Länge überspannt, und der an seinen beiden Enden von den Stützen 10 getragen ist. Die Befestigung der Fördertrommel 2 erfolgt über ein in der Zeichnung nicht näher dargestellten Lager, so dass die Fördertrommel 2 um ihre horizontale Achse rotierbar angetrieben ist.

Die erste Tragkonstruktion 9, in der die Fördereinrichtung 3 eingehängt ist, ist vorzugsweise an der zweiten Tragkonstruktion 10, 11 befestigt, wobei die Fördereinrichtung 3 zweckmäßig wenigstens an der Stirnseite 7 der Fördertrommel 2 mit seitlichem Abstand bis zur Brückenarmstützenkonstruktion geführt ist und also bei den dargestellten zwei Stützen 10 zwischen diesen Stützen 10 der zweiten Tragkonstruktion hindurchgeführt ist.

Die Fördereinrichtung 3 umfasst an jedem Ende eine Umlenkrolle, wobei im Bereich der einen Umlenkrolle 12 an einem der Enden zwischen den beiden Stützen 10 eine nicht weiter dargestellte Abwurfvorrichtung 17 vorgesehen, über die das geförderte Schüttgut auf einer weitere, externe Fördereinrichtung abzuwerfen ist, die ebenfalls in der Zeichnung nicht dargestellt ist.

Die Stützen 10 der zweiten Tragkonstruktion umfassen bei der dargestellten Ausführungsform ein Fahrwerk, dessen Räder 13 auf Schienen 14 entlang der Mischbetthalde geführt sind. Der Trommelabräumer ist in der gewählten Vorschubrichtung 16, d.h. quer zur Rotationsachse der Fördertrommel 2 und in horizontaler Richtung, über die gesamte Länge einer Halde verfahrbar.

Die Vorschubgeschwindigkeit eines Trommelabräumers 1 wird in der Regel über seine Förderstärke geregelt, wobei der entsprechende Massestrom des kontinuierlich mit der Fördereinrichtung 3 aus der Stirnseite 7 der Fördertrommel 2 hinaus geförderten Schüttguts mittels einer Förderbandwaage zu messen ist.

Gemäß Stand der Technik werden bei Trommelabräumern üblicher Weise Einrollenförderbandwaagen verwendet, die in einer jeweiligen Fördereinrichtung, außerhalb des Wirkungsbereichs der Fördertrommel integriert sind. Eine solche Förderbandwaage ist durch eine Messrolle, eine Förderrolle, die über eine Wägebrücke und wenigstens einer Wägezelle vom Bandgerüst 6 abgestützt ist, aufgebaut. Nachteilig bei einer derartigen Vorrichtung zur Bestimmung der Abräumförderstärke eines Trommelabräumers ist eine begrenzte Messgenauigkeit von Einrollenförderbandwaagen.

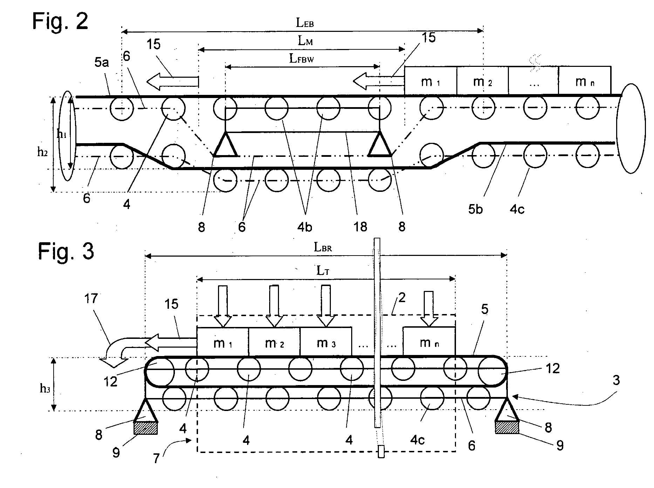

In Fig. 2 ist der Querschnitt einer aus der Fördertechnik bekannten und gattungsbildenden Mehrrollenförderbandwaage dargestellt, mit welcher gegenüber einer Einrollenförderbandwaage ein wesentlich genaueres Messergebniss bei der Bestimmung einer jeweiligen Förderstärke erreichbar ist.

Eine solche Mehrrollenförderbandwaage ist herkömmlicherweise in einer Fördereinrichtung, deren Förderstärke zu bestimmen ist, integriert und umfasst üblicher Weise vier bis sechs, ggf. auch mehr benachbarte Messrollen 4b. Die Messrollen 4b und die Förderrollen 4 der Fördereinrichtung weisen in der Regel alle einen einheitlichen Abstand zueinander auf, wobei die Messrollen 4b gemeinsam auf einer Wägebrücke 18 befestigt sind, die über Wägezellen 8 vom Bandgerüst 6 der Fördereinrichtung abgestützt sind.

Durch den erhöhten Platzbedarf im Einbaubereich einer Förderbandwaage, der im Wesentlichen durch die Wägebrücke 18 und die Wägezellen 8 bedingt ist, ist der untere, zurücklaufende Teil des Endlosförderbands 5b in einem größeren Abstand zum oberen Teil des Endlosförderbands 5a geführt. Somit erhöht sich zumindest im diesem Einbaubereich die Mindestaufbauhöhe der Fördereinrichtung von der in der Fig. 2 dargestellten Höhe $h_1$ auf die Höhe $h_2$.

Die gesamte Einbaulänge $L_{EB}$ einer Mehrrollenförderbandwaage beträgt zwischen 7 und 10 m, je nach Abstand der benachbarten Förderrollen 4 und Messrollen 4b. Bei einem Trommelabräumer ist kein ausreichender Abstand zwischen der Stirnseite 7 der Fördertrommel 2 und der Abwurfvorrichtung 17 vorhanden, um eine entsprechend lange Förderbandwaage aufzunehmen. Darüber hinaus ist im Innenraum der Fördertrommel ebenfalls kein ausreichender Platz, um eine Fördereinrichtung mit einer erhöhten Aufbauhöhe $h_2$ für die Integration einer solchen Förderbandwaage aufzunehmen.

In der Fig. 3 ist eine erfindungsgemäße Vorrichtung zur Erfassung der Förderstärke eines Brückenabräumers am Beispiel eines Trommelabräumers in einem schematischen Querschnitt dargestellt. Diese Vorrichtung ist eine Mehrrollenförderbandwaage, deren Wäge- bzw. Messstrecke sich über die gesamte Brückenlänge des Trommelabräumers $L_{BR}$ bzw. über die gesamte Länge der Fördereinrichtung 3 erstreckt. Die Förderollen 4 und 4b für die tragende bzw. zurücklaufende Seite des Förderbands 5 sind gemeinsam mit den Umlenkrollen 12 an dem Bandgerüst 6 befestigt, das durch das Innere der rotierenden Fördertrommel 2 geführt ist und an seinen beiden äußeren Enden über Wägezellen 8 an der ersten Tragkonstruktion 9 gelagert ist. Besonders vorteilhaft ist hierbei die im Vergleich zu einer in Fig. 2 dargestellten, herkömmlich aufgebauten Mehrrollenförderbandwaage wesentlich geringe Aufbauhöhe $h_3$.

Mit den Wägezellen 8 wird die gesamte Masse des von der Fördertrommel 2 auf dem Förderband 5 abgeworfenen Schüttguts erfasst, deren Gewicht mit der zu bestimmenden Abräumförderstärke eines Trommelabräumers korrespondiert.

Bei einer herkömmlichen Förderbandwaage, wie beispielhaft in Fig. 2 skizziert ist, wird das Förderband 5a mit dem zu fördernden Schüttgut vor der Wägestrecke der Förderbandwaage beladen. Die gesamte Masse m des Schüttguts, die in Fig. 2 als infinitesimale Masseelemente $m_i$ dargestellt ist (mit i = 1 bis n) wird über die vollständige Länge der Messstrecke $L_M$ der Förderbandwaage in Förderrichtung 15 bewegt und während dessen gewogen.

Die Förderstärke, der Massenstrom I des geförderten Schüttguts ergibt sich aus der Beziehung

$$I = m \cdot d/dt = m/t \qquad (1),$$

wobei t die Verweilzeit der gewogenen Masse m auf der Förderbandwaage entspricht. Da jedes der einzelnen Masseelemente $m_i$ die gesamte Messstrecke $L_M$ der Mehrrollenförderbandwaage durchläuft, ergibt sich für die Verweilzeit t eines Masseelemente $m_i$ auf der Messstrecke $L_M$ folgender Zusammenhang:

$$t = L_M/v \ , \qquad (2)$$

wobei v die Bandgeschwindigkeit des Förderbandes ist. Für die Förderstärke in Abhängigkeit der Länge der Messstrecke einer Förderbandwaage ergibt sich, unter Berücksichtigung einer aktuellen Bandgeschwindigkeit, somit folgender Zusammenhang:

$$I = m/L_M \cdot v \qquad (3).$$

Die Fördermenge eine Fördereinrichtung gemäß Fig. 2 ergibt sich aus der zeitlichen Integration der Förderstärke I.

Das erfindungsgemäße Verfahren zur Bestimmung der Abräumförderstärke eines Trommelabräumers, unter Verwendung einer Mehrrollenförderbandwaage, deren Wägestrecke sich über die gesamte Länge der Fördereinrichtung $L_{BR}$ erstreckt, basiert im Wesentlichen auf der Beziehung (3). Da die Länge der Messstrecke, die in das erfindungsgemäße Verfahren einbezogen werden kann, nicht der geometrischen Länge der Mehrrollenförderbandwaage entspricht, wird der Parameter der effektiven Länge der Förderbandwaage $L_{eft}$ eingeführt. Somit ergibt sich zur Bestimmung der Abräumförderstärke eines Trommelabräumers:

$$I = m/L_{eft} \cdot v \qquad (4).$$

Voraussetzung zur verfahrensgemäßen Bestimmung der effektiven Länge $L_{eft}$ einer entsprechenden Förderbandwaage ist, dass die Fördereinrichtung 3 entlang der Länge der Fördertrommel $L_T$ mit dem jeweiligen Schüttgut gleichmäßig beladen wird. Die geometrische Länge der Förderbandwaage entspricht der Länge der Förderstrecke, die sich über die gesamte Spannweite des Trommelabräumers $L_{BR}$ erstreckt. Da sich die Fördertrommel im Wesentlichen ebenfalls über die gesamte Spannweite des Trommelabräumers erstreckt, kann für ihre Länge vereinfacht $L_T \approx L_{BR}$ angenommen werden.

Wie mit der Fig. 3 veranschaulicht, wirkt ein erstes Masselement $m_1$ nur eine kurze Strecke, innerhalb der es in Richtung 15 zur Abwurfvorrichtung 17 gefördert wird, auf die gewogene Gesamtmasse ein, wobei ein letztes Masselement $m_n$ über die gesamte Länge ($L_T \approx L_{BR}$) der Fördereinrichtung auf die Gesamtmasse einwirkt.

Zur Bestimmung der effektiven Länge, d.h. der Strecke, die ein Masseelement durchschnittlich auf der Förderbandwaage bis zur Abwurfvorrichtung zurücklegt, wird die Gesamtlänge der Förderbandwaage in n infinitesimale Abschnitte unterteilt. Die Differenz zwischen den Strecken, die zwei benachbarte Masseelemente auf der Förderbandwaage bis zur Abwurfvorrichtung zurücklegen, beträgt somit $L_{BR}/n$. Der Durchschnittwert, der die effektive Länge $L_{eft}$ der Förderbandwaage zur Bestimmung der Abräumförderstärke ergibt, ergibt sich aus Summenbildung der zurückzulegenden Strecken aller Masselelemnente $m_i$, wobei dieser Wert durch die Gesamtanzahl n der Masseelemente dividiert werden muss:

$$L_{eft} = L_{BR}/n \cdot 1/n \cdot [1 + 2 + 3 + \dots + n] \qquad (5).$$

Für die endliche Reihe in dem letzten Faktor der Beziehung (5) gilt:

$$1 + 2 + 3 + \dots + n = n(n+1)/2 \qquad (6),$$

so dass sich für die effektiven Länge folgender Ausdruck ergibt:

$$L_{eft} = L_{BR}/n \cdot 1/n \cdot [n(n+1)/2] \qquad (7)$$

$$L_{eft} = L_{BR}/2 \cdot (n+1)/n \qquad (8).$$

Mit der Grenzwertbildung n→∞ ergibt sich:

$$L_{eft} = L_{BR}/2 \qquad (9).$$

Bei dem erfindungsgemäßen Verfahren zur Bestimmung der Abräumförderstärke eines Trommelabräumers entspricht der Parameter der effektiven Länge der verwendeten Förderbandwaage somit der halben Brückenlänge $L_{BR}$ des Trommelabräumers.

Die ermittelte Abräumförderstärke kann folglich zur Steuerung der Vorschubgeschwindigkeit der verfahrbaren zweiten Tragkonstruktion (10, 11) und/oder der Rotationsgeschwindigkeit des Abräumrotationswerkzeuges (2) verwendet werden.

**Patentansprüche**

1. Vorrichtung zur Bestimmung der Abräumförderstärke eines Brückenabräumers (1), der zum Abräumen einer Schüttguthalde diese überspannt, und ein Abräumrotationswerkzeug (2) und eine Fördereinrichtung (3) umfasst,

   wobei das Abräumrotationswerkzeug (2) um eine horizontale Achse rotierbar ausgebildet ist, um Schüttgut aus der Schüttguthalde aufzunehmen und zur Rotationsachse hin abzuwerfen,
   wobei die Fördereinrichtung (3) ein von Förderrollen (4) getragenes Endlosförderband (5) und ein die Förderrollen tragendes Bandgerüst (6) umfasst, w
   obei die Fördereinrichtung im wesentlichen längs zur Rotationsachse des Abräumrotationswerkzeuges verläuft, und
   wobei die Fördereinrichtung (3) derart durch das rotierbare Abräumrotationswerkzeug (2) geführt ist, dass sie das abgeworfenen Schüttgut aufnehmen und zu einer der Stirnseiten (7) des rotierbaren Abräumrotationswerkzeug (2) des Brückenabräumers (1) hinaus befördern kann,
   **dadurch gekennzeichnet, dass**
   die Fördereinrichtung (3) des Brückenabräumers (1) ausschließlich über Wägezellen (8) an zwei gegenüberliegenden ersten Tragkonstruktionen (9) außerhalb der rotierbaren Abräumrotationswerkzeug (2) eingehängt ist und eine Förderbandwaage bildet, deren Messstrecke im Wesentlichen der Förderstrecke der Fördereinrichtung (3) entspricht.

2. Vorrichtung nach vorstehendem Anspruch, **dadurch gekennzeichnet, dass** das Abräumrotationswerkzeug (2) des Brückenabräumers (1) an einer zweiten Tragkonstruktion (10, 11) befestigt ist, wobei die zweite Tragkonstruktion einen Brückenarm (11) umfasst, der die Schüttguthalde überspannt und an jeweils seinen beiden Enden von wenigstens einer Stütze (10) getragen ist.

3. Vorrichtung nach vorstehendem Anspruch, **dadurch gekennzeichnet, dass** sich die durch das Abräumrotationswerkzeug (2) geführte Fördereinrichtung (3) über die gesamte Breite der zweiten Tragkonstruktion (10, 11) erstreckt.

4. Vorrichtung nach vorstehendem Anspruch, **dadurch gekennzeichnet, dass** die Fördereinrichtung (3) wenigstens an einem Ende der zweiten Tragkonstruktion (10, 11) mit seitlichem Abstand bis zu der wenigstens einen Stütze (10) geführt ist und wobei an einem solchen Ende der Tragkonstruktion (10, 11) eine Abwurfvorrichtung (17) für das Schüttgut vorgesehen ist.

5. Vorrichtung nach vorstehendem Anspruch, **dadurch gekennzeichnet, dass** die zweite Tragkonstruktion (10, 11) orthogonal zur Rotationsachse des Abräumrotationswerkzeuges (2) über die Schüttguthalde verfahrbar ist.

6. Vorrichtung nach einem der Ansprüche 1 bis 4, **dadurch gekennzeichnet, dass** das Abräumrotationswerkzeug (2) des Brückenabräumers (1) eine Abräumfödertrommel ist, die sich entlang ihrer Rotationsachse im Wesentlichen über die gesamte Spannbreite des Brückenarms (11) erstreckt.

7. Verfahren zur Bestimmung der Abräumförderstärke eines Brückenabräumers (1), mittels einer Vorrichtung nach einem der vorstehenden Ansprüche 1 bis 6,
**dadurch gekennzeichnet, dass**
das Gewicht, des auf der Fördereinrichtung (3) befindlichen Schüttguts, mittels der Förderbandwaage (3, 8) gewogen wird, und
wobei zur Ermittlung der mit dem Gewicht des Schüttguts korrespondierenden Abräumförderstärke ein weiterer Parameter herangezogen wird, der die effektive Länge der Messstrecke der Förderbandwaage repräsentiert.

8. Verfahren nach Anspruch 7, unter Verwendung der Vorrichtung zumindest nach Anspruch 6, **dadurch gekennzeichnet, dass** für den Parameter der effektiven Länge der Messstrecke die halbe Länge der Förderstrecke herangezogen wird, die von der Abräumfördertrommel überspannt wird.

9. Verfahren nach Anspruch 7 unter Verwendung der Vorrichtung zumindest nach Anspruch 5, **dadurch gekennzeichnet, dass** die ermittelte Abräumförderstärke zur Steuerung der Vorschubgeschwindigkeit der verfahrbaren zweiten Tragkonstruktion (10, 11) und/oder der Rotationsgeschwindigkeit des Abräumrotationswerkzeuges (2) verwendet wird.

## Claims

1. Apparatus for determining the reclaiming flow rate of a bridge-type reclaimer (1) spanning a bulk material heap for reclamation thereof and comprising a reclaiming rotary tool (2) and a conveyor (3),
wherein the reclaiming rotary tool (2) is configured rotatably about a horizontal axis in order to receive bulk material from the bulk material heap and discharge it in the direction of the rotation axis,
wherein the conveyor (3) comprises an endless conveyor band (5) supported by conveying rollers (4) and a band conveyor structure (6) supporting the conveying rollers, the conveyor running substantially longitudinally to the rotation axis of the reclaiming rotary tool, and
wherein the conveyor (3) is guided through the rotatable reclaiming rotary tool (2) in such a way that it can receive the discharged bulk material and can transport it out to one of the end faces (7) of the rotatable reclaiming rotary tool (2) of the bridge-type reclaimer (1),
**characterized in that**
the conveyor (3) of the bridge-type reclaimer (1) is suspended solely via weighing cells (8) from two mutually opposing first supporting structures (9) outside the rotatable reclaiming rotary tool (2) and forms a conveyor band weigher, the measurement section of which substantially corresponds to the conveying section of the conveyor (3).

2. Apparatus according to the preceding claim, **characterized in that** the reclaiming rotary tool (2) of the bridge-type reclaimer (1) is fastened to a second supporting structure (10, 11), the second supporting structure comprising a bridge arm (11) which spans the bulk material heap and is supported at each of its two ends by at least one support (10).

3. Apparatus according to the preceding claim, **characterized in that** the conveyor (3) guided through the reclaiming rotary tool (2) extends over the total width of the second supporting structure (10, 11).

4. Apparatus according to the preceding claim, **characterized in that** the conveyor (3), at least at one end of the second supporting structure (10, 11), is guided with lateral spacing up to the at least one support (10), and wherein a discharge apparatus (17) for the bulk material is provided at one such end of the supporting structure (10, 11).

5. Apparatus according to the preceding claim, **characterized in that** the second supporting structure (10, 11) is displaceable over the bulk material heap at right angles to the rotation axis of the reclaiming rotary tool (2).

6. Apparatus according to one of Claims 1 to 4, **characterized in that** the reclaiming rotary tool (2) of the bridge-type reclaimer (1) is a reclaiming conveying drum, which extends along its rotation axis substantially over the total span of the bridge arm (11).

7. Method for determining the reclaiming flow rate of a bridge-type reclaimer (1), by means of an apparatus according to one of the preceding Claims 1 to 6, **characterized in that** the weight of the bulk material present on the conveyor (3) is weighed by means of the conveyor band weigher (3, 8), and
wherein, for the determination of the reclaiming flow rate correlating to the weight of the bulk material, a further parameter is adopted, which represents the effective length of the measurement section of the conveyor band weigher.

8. Method according to Claim 7, using the apparatus at least according to Claim 6, **characterized in that**, for the parameter of the effective length of the measurement section, half the length of the conveying section which is spanned by the reclaiming conveying drum is adopted.

9. Method according to Claim 7, using the apparatus at least according to Claim 5, **characterized in that** the determined reclaiming flow rate is used to control the rate of advance of the displaceable second supporting structure (10, 11) and/or the rotation speed of the reclaiming rotary tool (2).

**Revendications**

1. Dispositif de détermination du débit de transport de reprise d'un appareil de reprise à pont (1) qui enjambe un tas de matières en vrac pour la reprise de ce dernier et comporte un outil rotatif de reprise (2) ainsi qu'un dispositif de transport (3),
l'outil rotatif de reprise (2) étant réalisé de manière à pouvoir tourner autour d'un axe horizontal, afin de recevoir des matières en vrac provenant du tas de matières en vrac et de les décharger en direction de l'axe de rotation,
le dispositif de transport (3) comportant une bande transporteuse sans fin (5) supportée par des rouleaux de transport (4) et une armature de bande (6) supportant les rouleaux de transport,
le dispositif de transport s'étendant essentiellement longitudinalement par rapport à l'axe de rotation de l'outil rotatif de reprise, et
le dispositif de transport (3) étant guidé à travers l'outil rotatif de reprise (2) pouvant tourner, de telle sorte qu'il puisse recevoir les matières en vrac déchargées et les transporter jusqu'à l'un des côtés frontaux (7) de l'outil rotatif de reprise (2) pouvant tourner de l'appareil de reprise à pont (1),
**caractérisé en ce que**
le dispositif de transport (3) de l'appareil de reprise à pont (1) est suspendu exclusivement par l'intermédiaire de cellules de pesage (8) à deux premières structures porteuses (9) opposées à l'extérieur de l'outil rotatif de reprise (2) pouvant tourner et forme une bascule pour bande transporteuse dont la section de mesure correspond essentiellement à la section de transport du dispositif de transport (3).

2. Dispositif selon la revendication précédente, **caractérisé en ce que** l'outil rotatif de reprise (2) de l'appareil de reprise à pont (1) est fixé à une deuxième structure porteuse (10, 11), la deuxième structure porteuse comportant un bras formant pont (11) qui enjambe le tas de matières en vrac et est supporté par au moins un support (10) à ses deux extrémités respectives.

3. Dispositif selon la revendication précédente, **caractérisé en ce que** le dispositif de transport (3) guidé à travers l'outil rotatif de reprise (2) s'étend sur toute la largeur de la deuxième structure porteuse (10, 11).

4. Dispositif selon la revendication précédente, **caractérisé en ce que** le dispositif de transport (3) est guidé au moins à une extrémité de la deuxième structure porteuse (10, 11), à distance latérale, jusqu'à l'au moins un support (10), et un dispositif de déchargement (17) pour les matières en vrac étant prévu à une telle extrémité de la structure porteuse (10, 11).

5. Dispositif selon la revendication précédente, **caractérisé en ce que** la deuxième structure porteuse (10, 11) peut être déplacée au-dessus du tas de matières en vrac de manière orthogonale à l'axe de rotation de l'outil rotatif de reprise (2).

6. Dispositif selon l'une quelconque des revendications 1 à 4, **caractérisé en ce que** l'outil rotatif de reprise (2) de l'appareil de reprise à pont (1) est un tambour transporteur de reprise qui s'étend le long de son axe de rotation essentiellement sur toute l'envergure du bras formant pont (11).

7. Procédé de détermination du débit de transport de reprise d'un appareil de reprise à pont (1), au moyen d'un dispositif selon l'une quelconque des revendications 1 à 6,
**caractérisé en ce que**
le poids des matières en vrac se trouvant sur le dispositif de transport (3) est pesé au moyen de la bascule pour bande transporteuse (3, 8), et pour déterminer le débit de transport de reprise correspondant au poids des matières en vrac, un paramètre supplémentaire étant utilisé, lequel représente la longueur effective de la section de mesure de la bascule pour bande transporteuse.

8. Procédé selon la revendication 7, utilisant le dispositif au moins selon la revendication 6, **caractérisé en ce que**, pour le paramètre de la longueur effective de la section de mesure, on utilise la demi-longueur de la section de transport qui est enjambée par le tambour transporteur de reprise.

9. Procédé selon la revendication 7, utilisant le dispositif au moins selon la revendication 5, **caractérisé en ce que** le débit de transport de reprise déterminé est utilisé pour la commande de la vitesse d'avance de la deuxième structure porteuse (10, 11) pouvant être déplacée et/ou de la vitesse de rotation de l'outil rotatif de reprise (2).

Fig. 1

Fig. 2

Fig. 3